# EUROPEAN PATENT SPECIFICATION

(11) **EP 1 873 863 B1**
(45) Date of publication and mention of the grant of the patent: **11.11.2009**
(21) Application number: 07010902.0
(22) Date of filing: 01.06.2007
(51) Int. Cl.: H01Q 1/24

(54) **Mobile radio communication device**
Mobile Funkkommunikationsvorrichtung
Dispositif de communication radio mobile

(30) Priority: 28.06.2006 JP 2006178678
(43) Date of publication of application: 02.01.2008
(73) Proprietor: Casio Hitachi Mobile Communications Co., Ltd., Higashiyamato-shi Tokyo 207-8501 (JP)
(72) Inventor: Murakami, Toshiyuki, Higashiyamato-shi Tokyo 207-8501 (JP); Ueno, Takaaki, Higashiyamato-shi Tokyo 207-8501 (JP); Kaneoya, Masanori, Higashiyamato-shi Tokyo 207-8501 (JP)
(74) Representative: Grünecker, Kinkeldey, Stockmair & Schwanhäusser Anwaltssozietät

(56) References cited:
- EP-A- 1 401 111
- US-A- 4 980 694
- US-A- 5 977 917

## Description

The present invention relates to a mobile radio communication device, such as a mobile phone.

Mobile radio communication devices, particularly mobile phones, equipped with built-in antenna are becoming gradually dominant in their field where a whip-antenna has been in the place of mainstream (see, for example, Unexamined Japanese Patent Application KOKAI Publication No.2002-319808). By having an antenna built-in the casing, a mobile radio communication device can furnish improved waterproofness and a higher mechanical strength, as well as allowing flexibility in the design of the casing.

By the way, an antenna of the mobile radio communication device should preferably be spaced apart from other built-in electronic elements within the device, for achieving insusceptibility to such other electronic elements and a lesser effect the antenna would have on such elements. With recent advancements in multi-functionalization of the mobile communication devices, however, the number of built-in electronic component in casings is increasing, and it is becoming difficult to realize such an antenna installation as to obtain sufficient antenna property.

From reference US 4,980,694, a mobile phone is known with an internal antenna in a space between an internal, electrically conductive enclosure for electrical apparatus of the unit and an external, electrically nonconductive housing of the unit. The antenna is a microstrip, folded-slot, edge-congruent device comprising a stack of alternate, electrically conductive layers and dielectric layers. A high frequency band antenna module and a low frequency band antenna module are included in the antenna, and all layers of that antenna are dimensioned to determine, at least in part, the frequency characteristics of the antenna. Perpendicular and parallel attachments are shown for a feed cable extending, via a hole in the enclosure, between the antenna and radiotelephone unit electrical apparatus within the enclosure.

Reference US 5977917 relates to a portable communication system, such as a mobile phone, which includes a first metal housing for containing a high frequency circuit unit such as a transmitting circuit and a receiving circuit, a second metal housing for containing a low frequency circuit unit such as a control circuit, and also an antenna mounted on the first metal housing. An antenna apparatus for this portable communication system is arranged by the above-explained antenna, first and second metal housings, and also a control element for controlling distribution of high frequency currents flowing through the first and second metal housings. An antenna radiation pattern of this antenna apparatus can be optimized by controlling an impedance of the control element.

From reference EP-A-1401111 a folding type mobile phone is known, which includes a chassis part formed by a first chassis and a second chassis, the second chassis being foldably connected to the first chassis. The chassis part includes a conductive part whose length is approximately half wave length of a frequency used by the mobile phone, and an electric notch.

It is an aim of the present invention to provide a mobile phone with improved waterproofness and antenna efficiency.

This is achieved by the features of the independent claims. Preferred embodiments are subject matter of the dependent claims.

These objects and other objects and advantages of the present invention will become more apparent upon reading of the following detailed description and the accompanying drawings, in which:
FIG. 1A is a left side view of a mobile radio communication device 1 according to the present embodiemnt;
FIG. 1B is a front view of the mobile radio communication device 1;
FIG. 1C is a right side view of the mobile radio communication device 1;
FIG. 2 is a fragmentary cross-sectional view taken in the direction of arrows II-II of FIG. 1B, substantially along the line indicated by the arrows;
FIG. 3 is an exploded perspective view of the lower body 2 of the mobile radio communication device 1;
FIG. 4 is a perspective view showing the front face, the left face and the bottom face of an inner casing 20;
FIG. 5 is a perspective view showing the front face, right face and bottom face of the inner casing 20;
FIG. 6 is a perspective view showing an antenna member 50; and
FIG. 7 is a perspective view showing an antenna member 60.

A detailed description of the present invention will be given in the following.

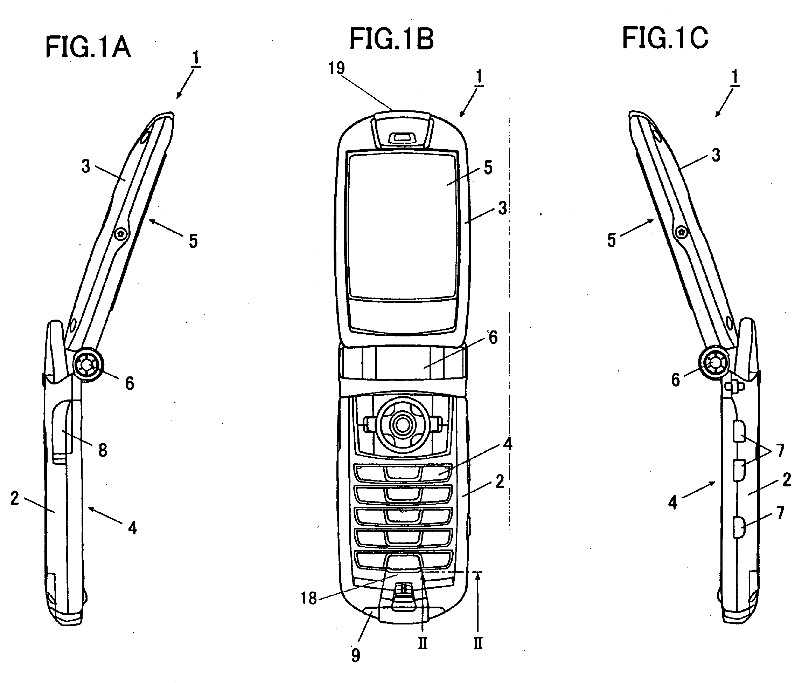

FIG. 1A is a left side view showing a mobile radio communication device 1 according to an embodiment of the present invention. FIG. 1B shows the front view of the same, and FIG. 1C shows the right side view. As shown in FIGS. 1A through 1C, the mobile radio communication device 1 comprises a lower body 2 having a control pad section 4 and a telephone microphone 18, and an upper body 3 having a display section 5 and a telephone earphone 19. The lower body 2 and the upper body 3 are connected by a hinge unit 6, so that the upper body 3 can fold flat on the top of the lower body 2. On a side face of the lower body 2, a side key 7, a year phone cover 8 and a connector cover 9 are provided.

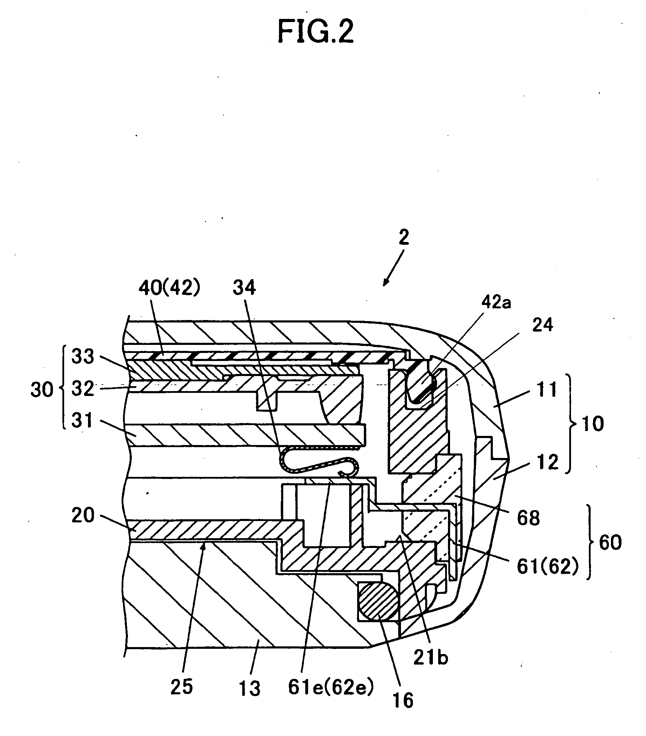

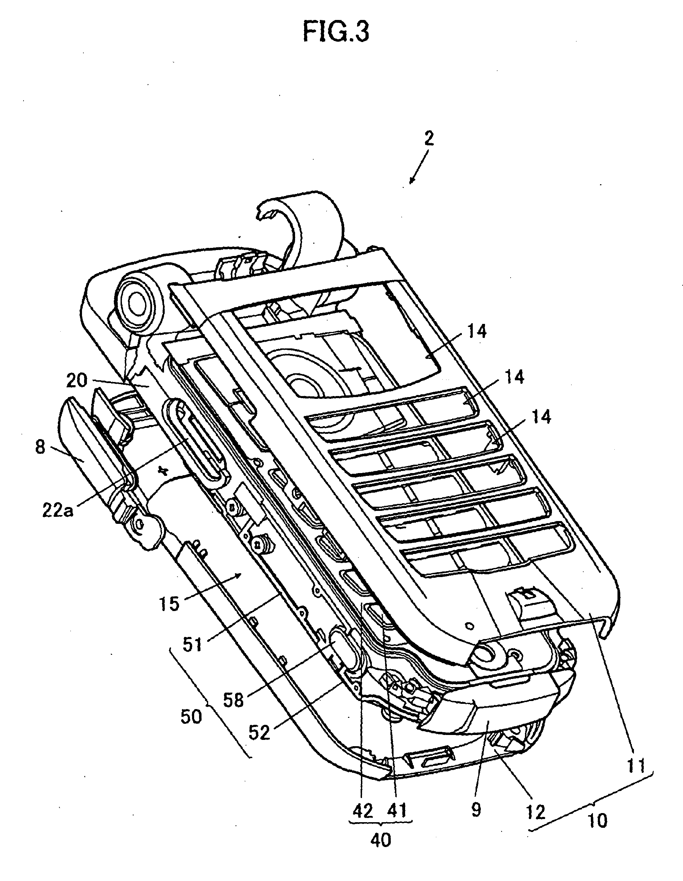

FIG. 2 is a fragmentary cross-sectional view taken in the direction of the arrows II-II of FIG. 1B, substantially along the line indicated by arrows. FIG. 3 shows an exploded perspective view of the lower body 2. The lower body 2 has an outer casing 10, an inner casing 20, a circuit module (circuit unit) 30 and a key pad 40, etc.

A front case 11 to fit on the side of control pad section 4 and a rear case 12 constitutes an outer casing 10. Both the front case 11 and a rear case 12 are formed of synthetic resin.

The front case 11 has apertures 14 through which to expose key tops 41 of a key pad 40 provided on the front face of an inner casing 20. The rear case 12 has an aperture 15 to expose a battery 13 provided on a back of the inner casing 20 (see FIG. 2). The battery 13 has an integrated battery cover.

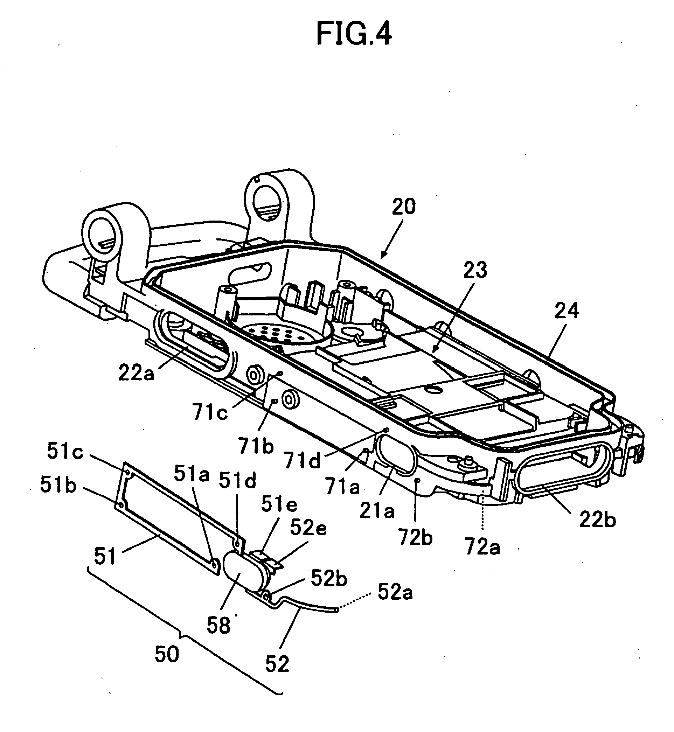

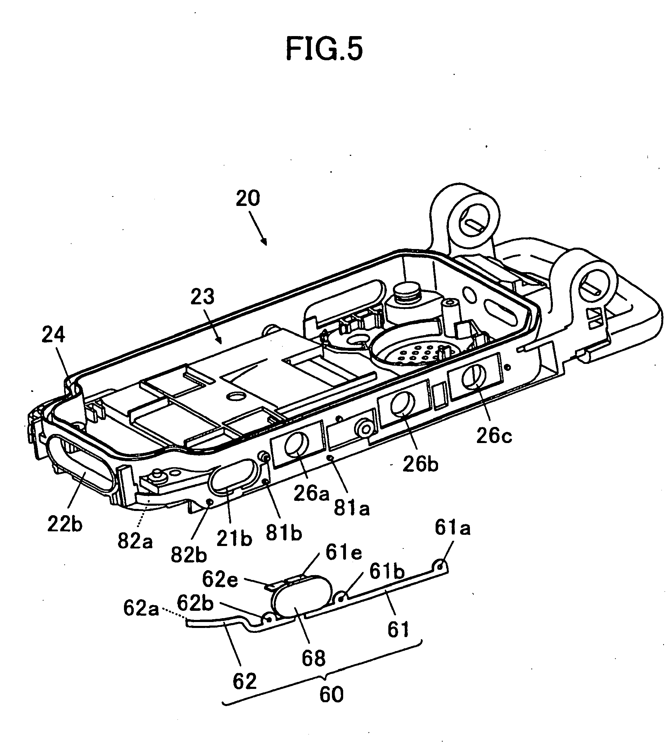

The inner casing 20 is formed of a synthetic resin, and has a storage recess 23 in the front side (see FIG. 4 or FIG. 5). Inside the storage recess 23 a circuit module 30 and a key pad 40 are stored. Further, around the aperture of the storage recess 23, the inner casing 20 has a slot 24 into which to fit a thick portion 42a of a later-described key pad rubber 42, around the rim of the key pad rubber 42.

A circuit module 30 comprises a main substrate 31 (circuit board), a main frame 32 and a keypad circuit board 33. Mounted on the main substrate 31 are electronic elements such as a main processor, a memory, a modem, a power IC, an antenna, an IF connector, and an ear phone connector. As shown in FIG. 2, on the back of the main substrate 31 (in FIG. 2, on the bottom surface), a spring terminal 34 having substantially S-shape cross-section is provided. The spring terminal 34 contacts a feeding end of a later-described antenna members 50 and 60. The spring terminal 34 is provided in correspondence to each antenna, and FIG. 2 shows feeding end 61e (62e) of the antenna 61(62) contacting the spring terminal 34.

The main frame 32 is formed of, for example, a magnesium alloy to enhance the strength of the lower body 2, as well as serving as an electric ground and an electromagnetic wave shielding (noise shield). On the back of the main frame 32, one or a plurality of recess portions are formed, and there is provided the main substrate 31 in such a manner that the main processor, the memory, the modem, the power IC, etc. are stored in the recess portion.

The front face of the main frame 32 (in FIG. 2, upper surface) is a flat surface on which to locate a keypad circuit board 33. The key pad 40 is located on the top of the keypad circuit board 33.

The key pad 40 has a key pad rubber 42 placed on the keypad circuit board 33, and key tops 41 put on the top of the key pad rubber 42. The key pad rubber 42 is a sheet-like article formed of elastic materials including silicon rubber, and has a thick portion 42a, around the rim of the key pad rubber 42. As shown in FIG. 2, this thick portion 42a fits into a slot 24 of the inner casing 20 to close the storage recess 23, and prevents water from entering to the inner casing 20 from the front side where the front case 11 locates.

The key tops 41 are exposed through the aperture of the front case 11 and constitute control buttons on the control pad section 4.

On the back of the inner casing 20, a battery attachment section 25 (see FIG. 2) is formed. In the battery attachment section 25, a terminal of not-shown power-source connector attached on the back of the main substrate 31 is exposed. However, an O-ring 16 is provided around an outer circumference surface of battery 13, and this affords water-tight sealing between the inner casing 20 and the battery 13. Therefore, it is possible to prevent entrance of water to the vicinity of a portion in the inner casing where a terminal of the main substrate 31 and a terminal of the battery case are contacting each other (not shown).

Further, on the sidewall of the inner casing 20, as shown in FIG. 4 and FIG. 5, antenna holes 21 a and 21 b, an ear phone connector hole 22a, a communication cable connector hole 22b, side-key holes 26a to 26c are provided.

FIG. 4 is a perspective view of the front face, left side face, and bottom face of the inner casing 20. FIG. 5 is a perspective view showing a front face, right side face, and a bottom face of the inner casing 20.

The ear phone connector hole 22a is provided on the left side wall of the inner casing 20, and this connector hole 22a is covered by a year phone cover 8 in a watertight manner. The communication cable connector hole 22b is provided on the bottom side wall of the inner casing 20, and this connector hole 22b is covered by a connector cover 9 in a watertight manner. The side key holes 26a to 26c are provided on the right side wall of the inner casing 20, and these key holes 26a to 26c are covered by a rubber water-proof film in a watertight manner, so that the keys, when operated, press down switches provided within the inner casing 20 via the water-proof film.

The antenna hole 21 a is provided on the left side wall of the inner casing 20, and the antenna hole 21b is provided on the right side wall of the inner casing 20. Into these antenna holes 21 a and 21 b, packing 58 and 68 of the antenna members 50 and 60 are fit. The following gives description of the antenna members 50 and 60.

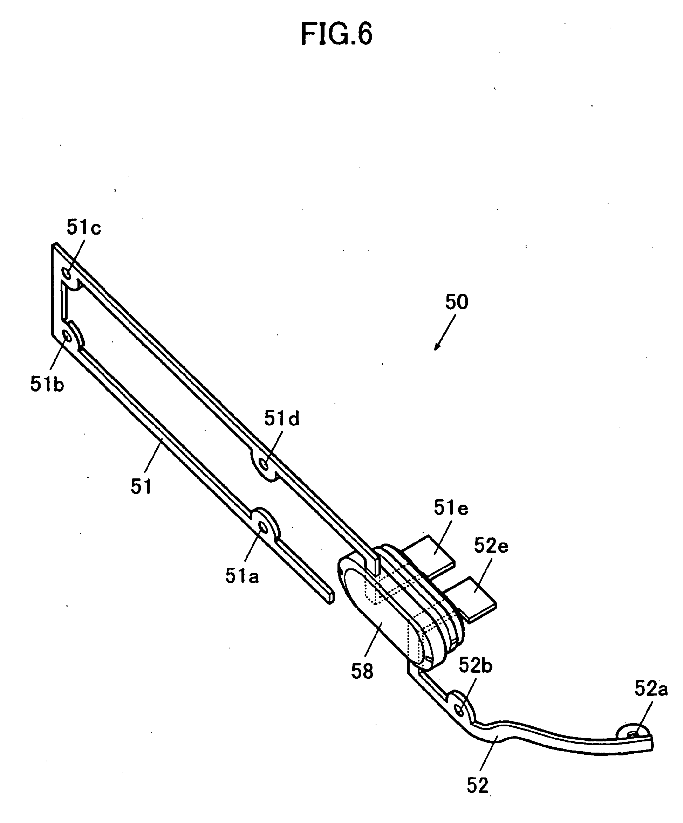

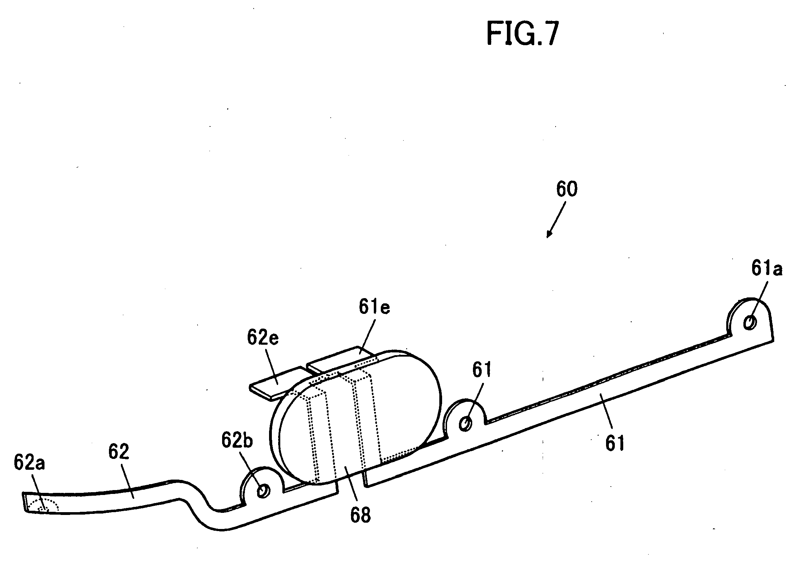

As shown in FIG. 6, the antenna member 50 comprises a first antenna 51, a second antenna 52 and a packing 58 to which these two antennas 51 and 52 are embedded. Further, as shown in FIG. 7, the antenna member 60 comprises a third antenna 61, a fourth antenna 62, and a packing 68 to which these two antennas 61 and 62 are embedded. The first to fourth antennas 51 to 62 are formed of a thin metal plate (preferably, thin plate of anticorrosive metal, such as stainless steel), and the packing 58 and 68 are formed of soft elastic materials including silicon rubber. The embedding of the antennas into the packing 58 and 68, in other words, the integration of the antenna and the packing can be performed relying on a well-known insertion molding.

The first antenna 51 to the fourth antenna 62 are formed so as to have respective electrical lengths suitable for communications using individually different wavelength.

The first antenna 51 is used for transmission and reception of the radio wave, for example of a band of 800MHz for mobile phones, and the second antenna 52 is used for transmission and reception of a radio wave of a band of 2GHz for mobile phones. Here, in the case where the first antenna 51 is used for transmission and reception of the radio wave of the band of 800MHz, when the wavelength of 800MHz is defined as λ1, the first antenna 51 is formed to have an electrical length of λ1/4. Similarly, in the case where the second antenna 52 is used for transmission and reception of the radio wave of the band of 2GHz, when the wavelength of 2GHz is defined as λ2, the second antenna 52 is formed to have an electrical length of λ2/4.

The third antenna 61 is used for, for example reception of L1 radio wave (1. 57542GHz) for a GPS(Global Positioning System), and the fourth antenna 62 is used for transmission and reception of a radio wave for a short distance wireless communication (for example, a radio wave of 2. 45GHz band for Bluetooth (registered trademark)). Here, in the case where the third antenna 61 is used for reception of L1 radio wave for GPS, when the wavelength of L1 radio wave of GPS is defined as λ3, the third antenna 61 is formed to have an electrical length of λ3/4. In the same way, in the case where the fourth antenna 62 is used for transmission and reception of a radio wave for Bluetooth, when the wavelength of the radio wave for Bluetooth is defined as λ4, the fourth antenna 62 is formed to have an electrical length of λ4/4. That is, all the first to fourth antennas 51 to 62 are constructed as monopole antennas.

In the first antenna 51, four positioning holes 51a to 51d are provided on respective positions. Thus positioning holes receive the insertion of positioning pins 71a-71d provided on the inner casing 20 (see FIG. 4) when the first antenna 51 is attached to the left face (outer face of the left side wall) of the inner casing 20.

In the same way, the second antenna 52 has two positioning holes 52a and 52b which are provided on their respective positions and receive insertion of positioning pins 72a and 72b provided on the inner casing 20 (see FIG. 4) when the second antenna 52 is attached to the left face of the inner casing 20.

The third antenna 61 has two positioning holes 61a and 61 b provided on their respective positions. The positioning holes 61 a and 61 b receive insertion of positioning pins 81a and 81b provided on the inner casing 20, when the third antenna 61 is attached to the right side face (outer face of the right side wall) of the inner casing 20.

In the same way, the fourth antenna 62 has two positioning holes 62a and 62b which receive insertion of positioning pins 82a and 82b provided on the inner casing 20 (see FIG. 5) when the fourth antenna 61 is attached to the right side face of the inner casing 20.

The antennas 51, 52, 61 and 62 are bent in the vicinity of their respective feeding ends 51e, 52e, 61e and 62e, and these bent portion are embedded in the packing 58 and 68. In other words, the body of the antennas 51, 52, 61 and 62 and the respective feeding ends 51e, 52e, 61e and 62e are exposed from the packing 58 and 68.

As shown in FIG. 2, the packing 68 is inserted into the antenna hole 21 b to seal the antenna hole 21b in a watertight manner. In the same way as the packing 68, the packing 58 is also inserted into the antenna hole 21a to seal the antenna hole 2 1 a in a watertight manner. When the packing 58 and 68 are inserted into the antenna hole 21a and 21b, the feeding ends 51e, 52e, 61e and 62e of the antennas 51, 52, 61 and 62 are positioned within the inner casing 20, the spring terminal 34 of the main substrate 31 contacts the feeding ends 51e, 52e, 61 e and 62e within the inner casing 20. On the other hand, the body portions of the antennas 51, 52, 61 and 62, are positioned along the outer circumference surface of the inner casing 20 (outer face of the side wall). The outer circumference surface of inner casing 20 along which the body portions of the antennas 51, 52, 61 and 62 are located is covered by the outer casing 10.

As described above, the antennas 51, 52, 61 and 62 are located along the outer circumference surface of the inner casing 20, and only feeding ends 51 e, 52e, 61 e and 62e are inserted into the inner casing 20 through the antenna holes 2 1 a and 2 1 b, and therefore the antennas 51, 52, 61 and 62 are sufficiently spaced apart from the electronic elements within the inner casing 20 (in other words, the electronic elements within the lower body 2). Accordingly, the antennas 51, 52, 61 and 62 is insusceptible to other electronic elements in the inner casing 20, and the effect which the antennas 51, 52, 61 and 62 have on other electronic elements is less. As a result, a sufficient antenna property can be obtained.

Further, since the outer circumference surface of the inner casing 20 to which the antennas 51, 52, 61 and 62 are attached is covered by an outer casing 10, the antennas 51, 52, 61 and 62 are not exposed outside the casing, and do not directly receive an external force.

Further, since the antenna holes 2 1 a and 21b through which the feeding ends 51e, 52e, 61e and 62e of the antennas 51, 52, 61 and 62 are inserted into the inner casing 20 are stopped up by the packing 58 and 68, it is possible to prevent entrance of the water into the inner casing 20, and to protect the electronic elements inside.

Further, since the packing 58 (or 68) is integrally attached to antennas 51 and 52(or 61 and 62), it is easy to attach the antennas 51 and 52 (61 and 62) to the inner casing 20. That is, by only inserting packing 5 8 (or 68) to antenna holes 21a and 21b, antennas 51 and 52 (or 61 and 62) are attached to the outer face of the side wall of the inner casing 20 (at least temporarily tacked). Moreover, in the present embodiment, as shown in FIGS. 4 and 5 the antenna holes 21a and 21b are not round holes but oblong holes, and the packing 58 and 68 are of corresponding forms, the antennas 51 and 52 (or 61 and 62) are located on the outer face of the side wall of the inner casing 20 in a substantially optimal orientation when the packing 58 and 68 is inserted into antenna holes 21a and 21b.

Further, since on the antennas 51, 52, 61 and 62, the positioning holes 61 a, 61b are formed, and on the outer face of the side wall of the inner casing 20 positioning pins are provided, the antennas come intimate contact with the outer face of the side wall of the inner casing 20 when the positioning pins are inserted into the positioning holes 61a and 61b. Accordingly, the antennas do not inhibit the attachment of the outer casing to the inner casing 20.

The present invention is not limited to the above embodiment, and various modification can be made within the scope of the present invention.

For example, the point, in the above embodiment, that the antenna is formed of a metal thin plate: a linear element can be applied. Further, the point in the embodiment, that two antennas are embedded to one packing: in a possible modification, one packing may have one antenna embedded thereto, and may have three or more antennas embedded. Further, it is possible to configure the antenna and the packing as separate parts. In this case, the workability in assemblage and waterproofness are a little inferior to that of the integrated antenna and packing structure (the structure in which the antenna is embedded to the packing) since the packing is inserted to the antenna hole of the inner casing after that the antenna has been inserted to the antenna hole of the packing, but, it is possible to fix the antenna.

Further, in the above embodiment, the antenna hole is formed in an oblong shape. However, another form may be successfully applied. In the integrated packing and antenna structure, it is preferable that the form of the antenna hole is noncircular shape if workability is taken care of.

In the above embodiment, an example in which the outer casing is constituted by the front case and the rear case, but, it is possible that the outer casing consists only of a front case. In this case, the structure may be such that, all-around the inner casing, that portion which underlies the antenna-holding portion of the outer face of the side wall of the inner casing projects outwardly, and such that the outer face of the antenna-holding portion of the side wall of the inner casing may be covered with the front case.

Further, the antenna may be positioned wherever the outer face of the inner casing is covered by the outer casing.

## Claims

1. A mobile radio communication device comprising:
a first antenna (51; 61) and a second antenna (52; 62) whose communication frequencies are different;
a circuit board (31) on which a plurality of electronic elements are mounted and to which the antennas (51, 52; 61, 62) are connected;
an inner casing (20) which houses the circuit board (31);
an outer casing (10) which covers the inner casing (20); and
an antenna hole (21 a; 21 b) formed on an outer circumference surface of the inner casing (20), so that feeding ends (51 e, 52e; 61 e, 62e) of the antennas are connected to a terminal of the circuit board housed inside the inner casing,
**characterized by**
a water-proof packing (58) which is shaped to be accommodated in the antenna hole to prevent water from entering inside the inner casing through the antenna hole, and is fit into the antenna hole,
wherein the first antenna and the second antenna have their respective middle portions embedded in the water-proof packing, whereby when the antenna hole is sealed with the water-proof packing, the feeding ends of the first antenna and the second antenna are exposed to an inside of the inner casing through the water-proof packing, whereas main antenna bodies of the first antenna and the second antenna are exposed to an outside of the inner casing through the water-proof packing; and
the main antenna body of the first antenna is disposed in a first direction along the outer circumference surface of the inner casing, and the main antenna body of the second antenna is disposed in a second direction, which is different from the first direction along the outer circumference surface of the inner casing.

2. The mobile radio communication device according to claim 1, wherein:
the antennas are provided with positioning holes, and in the outer circumference surface of the inner casing, positioning pins, which are to be inserted into the positioning holes when the antennas are disposed, are provided.

3. The mobile radio communication device according to claim 1 or 2, wherein:
the first direction in which the main antenna body of the first antenna is disposed is a circumferential longitudinal direction of the outer circumferential surface of the inner casing, and the second direction in which the main antenna body of the second antenna is disposed is another circumferential longitudinal direction of the outer circumferential surface of the inner casing, which is opposite to the first direction.

## Patentansprüche

1. Mobilfunk-Kommunikationsvorrichtung, die umfasst:
eine erste Antenne (51; 61) und eine zweite Antenne (52; 62), deren Kommunikationsfrequenzen sich voneinander unterscheiden;
eine Leiterplatte (31), auf der eine Vielzahl elektronischer Elemente montiert sind und mit der die Antennen (51,52; 61, 62) verbunden sind;
ein inneres Gehäuse (20), das die Leiterplatte (31) aufnimmt;
ein äußeres Gehäuse (10), das das innere Gehäuse (20) abdeckt; und
ein Antennenloch (21a; 21b), das an einer Außenumfangsfläche des inneren Gehäuses (20) so ausgebildet ist, dass Speiseenden (51 e, 52e; 61 e, 62e) der Antennen mit einem Anschluss der Leiterplatte verbunden sind, die im Inneren des inneren Gehäuses aufgenommen ist,
**gekennzeichnet durch**
eine wasserundurchlässige Dichtung (58), die so geformt ist, dass sie in dem Antennenloch aufgenommen wird, um zu verhindern, dass über das Antennenloch Wasser in das Innere des inneren Gehäuses eindringt, und die in das Antennenloch eingepasst ist,
wobei die Mittelabschnitte der ersten und der zweiten Antenne jeweils in die wasserundurchlässige Dichtung eingebettet sind, so dass, wenn das Antennenloch mit der wasserundurchlässigen Dichtung abgedichtet ist, die Speiseenden der ersten Antenne und der zweiten Antenne zu einem Innenraum des inneren Gehäuses hin über die wasserundurchlässige Dichtung freiliegen, während Haupt-Antennenkörper der ersten Antenne und der zweiten Antenne über die wasserundurchlässige Dichtung von dem inneren Gehäuse nach außen hin freiliegen; und
der Haupt-Antennenkörper der ersten Antenne in einer ersten Richtung an der Außenumfangsfläche des inneren Gehäuses angeordnet ist und der Haupt-Antennenkörper der zweiten Antenne in einer zweiten Richtung, die sich von der ersten Richtung unterscheidet, an der Außenumfangsfläche des inneren Gehäuses angeordnet ist.

2. Mobilfunk-Kommunikationsvorrichtung nach Anspruch 1, wobei:
die Antennen mit Positionierlöchern versehen sind und in der Außenumfangsfläche des inneren Gehäuses Positionierzapfen vorhanden sind, die in die Positionierlöcher einzuführen sind, wenn die Antennen angeordnet werden.

3. Mobilfunk-Kommunikationsvorrichtung nach Anspruch 1 oder 2, wobei:
die erste Richtung, in der der Haupt-Antennenkörper der ersten Antenne angeordnet ist, eine Umfangs-Längsrichtung der Außenumfangsfläche des inneren Gehäuses ist und die zweite Richtung, in der der Haupt-Antennenkörper der zweiten Antenne angeordnet ist, eine andere Umfangs-Längsrichtung der Außenumfangsfläche des inneren Gehäuses ist, die zu der ersten Richtung entgegengesetzt ist.

## Revendications

1. Dispositif de radiocommunication mobile comprenant :
une première antenne (51 ; 61) et une deuxième antenne (52; 62) dont les fréquences de communication sont différentes ;
une carte de circuit (31) sur laquelle une pluralité d'éléments électroniques sont montés et à laquelle les antennes (51, 52 ; 61, 62) sont connectées ;
un boîtier interne (20) qui loge la carte de circuit (31) ;
un boîtier externe (10) qui recouvre le boîtier interne (20) ; et
un trou d'antenne (21a ; 21b) formé sur une surface circonférentielle externe du boîtier interne (20), de sorte que les extrémités de source (51e, 52e ; 61e, 62e) des antennes soient connectées à une borne de la carte de circuit logée à l'intérieur du boîtier interne,
**caractérisé par**
une garniture étanche à l'eau (58) qui est formée de manière à être reçue dans le trou d'antenne pour empêcher la pénétration d'eau à l'intérieur du boîtier interne à travers le trou d'antenne, et qui est insérée dans le trou d'antenne,
dans lequel les parties centrales respectives de la première antenne et de la deuxième antenne sont intégrées dans la garniture étanche à l'eau, moyennant quoi, lorsque le trou d'antenne est fermé de manière étanche par la garniture étanche à l'eau, les extrémités de source de la première antenne et de la deuxième antenne sont exposées à un intérieur du boîtier interne par l'intermédiaire de la garniture étanche à l'eau, tandis que les corps principaux d'antenne de la première antenne et de la deuxième antenne sont exposés à un extérieur du boîtier interne par l'intermédiaire de la garniture étanche à l'eau ; et
le corps principal d'antenne de la première antenne est disposé dans une première direction le long de la surface circonférentielle externe du boîtier interne, et le corps principal d'antenne de la deuxième antenne est disposé dans une deuxième direction, qui est différente de la première direction le long de la surface circonférentielle externe du boîtier interne.

2. Dispositif de radiocommunication mobile selon la revendication 1, dans lequel :
les antennes sont pourvues de trous de positionnement et, dans la surface circonférentielle externe du boîtier interne, des broches de positionnement, qui doivent être insérées dans les trous de positionnement lorsque les antennes sont disposées, sont prévues.

3. Dispositif de radiocommunication mobile selon la revendication 1 ou 2, dans lequel :
la première direction dans laquelle le corps principal d'antenne de la première antenne est disposé est une direction longitudinale circonférentielle de la surface circonférentielle externe du boîtier interne, et la deuxième direction dans laquelle le corps principal d'antenne de la deuxième antenne est disposé est une autre direction longitudinale circonférentielle de la surface circonférentielle externe du boîtier interne, qui est opposée à la première direction.
